# EUROPEAN PATENT APPLICATION

(11) **EP 1 401 038 A1**
(43) Date of publication of application: **24.03.2004**
(21) Application number: 03018959.1
(22) Date of filing: 20.08.2003
(51) Int. Cl.: H01M 8/02

(54) **Separator for fuel cell and manufacturing method thereof**

(30) Priority: 21.08.2002 JP 2002240525; 13.02.2003 JP 2003034668
(71) Applicant: THE JAPAN STEEL WORKS, LTD., Tokyo (JP)
(72) Inventor: Uejima, Hirokazu, Muroran-shi, Hokkaido (JP); Yamamura, Yoshihiko, Muroran-shi, Hokkaido (JP); Nishiya, Shinichi, Muroran-shi, Hokkaido (JP); Shibata, Takashi, Muroran-shi, Hokkaido (JP)
(74) Representative: Grünecker, Kinkeldey, Stockmair & Schwanhäusser Anwaltssozietät

(57) **Abstract**

Conductive polymer films are formed on the surfaces of a substrate made of a metal material by, preferably, electrolytic polymerization. Alternatively, passive-state layers are formed on the surfaces of a substrate and conductive polymer films are formed on the passive-state layers. It is desirable to form groove-like gas flow passages by bending the substrate before the execution of electrolytic polymerization or the formation of passive-state layers. In the electrolytic polymerization, it is desirable that electrolysis be performed by using the substrate as an electrolytic polymerization electrode. Therefore, a metal separator having conductive polymer coatings that are superior in contact resistance and corrosion resistance can be obtained. The manufacturing cost of a polymer electrolyte fuel cell can be reduced.

## Description

The present application is based on Japanese Patent Applications No. 2002-240525 and 2003-34668, the entire contents of which are incorporated herein by reference.

### BACKGROUND OF THE INVENTION

### 1. Field of the invention

The present invention relates to a separator for a fuel cell that is provided adjacent to electrodes as well as to its manufacturing method.

### 2. Related Art

A polymer electrolyte fuel cell is formed by laminating a plurality of cells each of which is composed of an electrolyte that is an ion exchange film, electrodes disposed on both sides of the electrolyte, and separators disposed on both sides of the electrolyte/electrodes structure. The separators have groove-like flow passages through which to supply a fuel gas such as hydrogen and an oxidizer gas such as oxygen to the respective electrodes, and function as collectors that are in contact with the respective electrodes.

Among important characteristics of separators are high gas impermeability for supplying a fuel gas and an oxidizer gas in a completely separated manner, high conductivity and low contact resistance for preventing performance reduction due to a voltage drop, high corrosion resistance that is required because of use in an acid atmosphere (pH: 3 or less), and high mechanical strength for preventing damage due to impact or the like. Since tens to hundreds of separators are used in a fuel cell module, separators are required to be inexpensive and superior in productivity.

In general, separators are made of a dense graphite or a metal material such as stainless steel or aluminum alloy. However, dense graphite has the following problems. Because dense graphite is fragile, it is difficult to form a separator by mechanical working such as cutting for formation of groove-like gas flow passages. Further, dense graphite is low in mass-productivity because of a high working cost and other reasons. On the other hand, separators made of a metal material are superior in strength and ductility and hence gas flow passages can be formed by press forming or the like, which means a low working cost. Therefore, separators made of a metal material are suitable for mass-production.

However, as mentioned above, separators are used in an acid environment (pH: about 3). This raises a problem that separators made of a metal material that is low in corrosion resistance are prone to corrode and metal ions are eluted from the separators to deteriorate the electrodes. One method for solving this problem is to use, for the separators, a metal material such as stainless steel that is superior in corrosion resistance. However, even metal materials that are superior in corrosion resistance are associated with a problem that large-resistivity passive-state layers formed on the metal surfaces increases the contact resistance between the separators and the electrodes, resulting in decrease in the collection characteristic of the separators.

One countermeasure against this problem is to cover the surfaces of separators made of a metal material with a noble metal material such as Au that is superior in contact resistance and corrosion resistance or a carbon conductive coating layer (refer to JP-A-2001-283880, for example).

However, the above countermeasure has a problem that the noble metal coating material is very expensive and inevitably the cost of a fuel cell module using a large amount of such a noble metal coating material becomes high. Separators that are formed with carbon conductive coating layers have a problem that surface roughening that is performed to increase the adhesion of the coating layer to the substrate lowers the production efficiency. Further, heating is performed in a non-oxidizing atmosphere to isolate and remove resin components from the conductive coating layers, which lowers the production efficiency and hence increases the cost.

### SUMMARY OF THE INVENTION

The present invention has been made to solve the above problems, and an object of the invention is therefore to provide a separator for a fuel cell that is inexpensive and superior in mass-productivity by employing, as a substrate, a metal material that is superior in mass-productivity and forming a coating that is superior in contact resistance and corrosion resistance on the surfaces of the substrate.
(1) To solve the above problems, among the separators for a fuel cell according to the present inventions, the invention is characterized in that a conductive polymer film is formed on a surface of a substrate made of a metal material.
(2) The invention of a separator for a fuel cell is further characterized in that a passive-state layer that is superior in conductivity and corrosion resistance is formed on a surface of a substrate made of a metal material and a conductive polymer film is formed on the passive-state layer.
(3) The invention of a separator for a fuel cell is further characterized in that the conductive polymer film has not been subjected to baking.
(4) Among the manufacturing methods of a separator for a fuel cell according to the present inventions, another aspect of the invention is characterized in that a conductive polymer film is formed on a surface of a substrate made of a metal material by electrolytic polymerization.
(5) The manufacturing method of a separator for a fuel cell in another aspect of the invention is characterized in that a conductive polymer film is formed, by electrolytic polymerization, on a passive-state layer that is formed on a surface of a substrate made of a metal material.
(6) The manufacturing method of a separator for a fuel cell in another aspect of the invention is characterized by the steps of forming groove-like gas flow passages by bending a substrate made of a metal material; and forming a conductive polymer film on a surface of the substrate by electrolytic polymerization.
(7) The manufacturing method of a separator for a fuel cell in the another aspect of the invention is characterized by the steps of forming groove-like gas flow passages by bending a substrate made of a metal material; forming a passive-state layer on a surface of the substrate; and forming a conductive polymer film on the passive-state layer by electrolytic polymerization.
(8) The manufacturing method of a separator for a fuel cell of the invention is further characterized in that the electrolytic polymerization is performed by using the substrate as an electrolytic polymerization electrode.

That is, the invention provides a separator in which conductive polymer coatings are formed on the surfaces of a substrate made of a metal material. The metal material realizes superior mechanical properties and gas impermeability. The conductive polymer coatings that are formed on the surfaces of the metal substrate prevent growth of passive-state layers having large resistivity that would otherwise be formed on the surfaces of the metal substrate in an environment in which fuel cells are used and thereby suppress increase in the contact resistance between the separator and electrodes: good collector characteristic can be maintained. Further, being superior in corrosion resistance, the conductive polymer coatings prevent corrosion of the metal substrate and thereby suppress elution of metal ions that are harmful to the electrodes. The metal separator in which the conductive polymer films are formed on the surfaces of the metal substrate has features that it is low in material and coating costs and superior in mass-productivity.

The separator of the invention is applicable not only to a single fuel cell unit but also to a fuel cell module constituted by a plurality of fuel cells.

The conductive polymer films can be formed by a coating method or electrolytic polymerization. In particular, the electrolytic polymerization does not require baking and hence makes it possible to avoid passivation of the substrate that is prone to occur in baking. Passive-state layers that would otherwise be formed by passivation in baking have a characteristic of lowering the conductivity. Further, dense coatings are formed on the surfaces of the substrate by the electrolytic polymerization and prevent corrosion of the substrate more effectively. The coating/baking method (hereinafter referred to as "coating method") is another polymerization method of conductive polymer films. In the coating method, polyaniline (conductive polymer) that has been synthesized in advance by chemical polymerization, for example, is dissolved in an organic solvent and the solution is applied to the surfaces of a substrate and then dried and heated (baked), whereby conductive polymer films are formed.

However, the electrolytic polymerization can produce coatings that are smaller in the number of coating defects, higher in conductivity, superior in productivity, and more stable in quality than or to coatings formed by the coating method. Conductive polymer films have a small number of minute defects, and the electrolytic polymerization can produce coatings that are smaller in the number of defects than coatings formed by the coating method. Thin coatings are preferable to obtain high conductivity, and the electrolytic polymerization can produce coatings that are thinner and stronger than coatings formed by the coating method. The electrolytic polymerization provides high adhesion to a metal material and a stable coating thickness. In terms of productivity, the electrolytic polymerization directly synthesizes conductive polymer films on the surfaces of a metal material electrochemically. Therefore, the electrolytic polymerization is advantageous over the coating method in that the number of steps is much smaller and the amount of liquid wastes such organic solvents is small. It is concluded that the electrolytic polymerization is suitable for formation of conductive polymer films.

In the electrolytic polymerization, coatings can be formed uniformly on the surfaces of a substrate by performing electrolysis using the substrate as an electrode. In the electrolytic polymerization, conductive polymer films are formed by directly synthesizing coatings of polyaniline (conductive polymer), for example, electrochemically on the surfaces of a metal substrate by performing electrolysis in an aqueous solution in which aniline is dissolved as a monomer using the separator metal substrate as the anode.

The separator in which conductive polymer films are formed on the surfaces of a substrate exhibits sufficient characteristics in itself. However, forming passive-state layers that are superior in conductivity and corrosion resistance between the substrate made of a metal material and the conductive polymer films enhances the corrosion resistance of the metal substrate and the adhesion between the metal substrate and the conductive polymer films. Further, even if the conductive polymer films have a small number of minute defects or are damaged during use, corrosion of the metal substrate can be prevented and elution of metal ions that are harmful to electrodes can be suppressed because the passive-state layers are formed under the conductive polymer films. The conductive polymer films also serve as coatings for protecting the passive-state layers. Therefore, the conductive polymer films and the passive-state layers function synergistically and constitute coatings that are superior in conductivity and corrosion resistance.

Where the passive-state layers are formed on the two respective surfaces of the substrate, the conductive polymer film may be formed either on both passive-state layers or on one of the two passive-state layers.

An exemplary method for forming passive-state layers that are superior in conductivity and corrosion resistance is to immerse a substrate in a solution of nitric acid, chromic acid, bichromate of soda, potassium permanganate, or the like. However, the invention is not limited such a method and other methods may be used such as electrolysis in an acid liquid and anodicpolarization. In forming passive-state layers, a control is made so as to form conductive coatings by adjusting the type of solution, the solution temperature, the immersion time, etc. The conductivity of passive-state layers should be sufficiently higher than that of passive-state layers that are formed on the surfaces of a metal substrate in an environment in which fuel cells are used. For example, it is desirable that the contact resistance be 10 mΩ·cm² or less.

In forming passive-state layers, it is desirable that fresh surfaces be formed by performing pretreatment of cleaning the surfaces of a substrate with an acid, an alkali solution, or the like.

If groove-like gas flowpassages are formed in a substrate by bending such as press forming before electrolytic polymerization and formation of passive-state layers, conductive polymer films andpassive-state layers are not damaged in forming gas flow passages and hence their intended functions can be obtained reliably. Performing electrolytic polymerization using the basic member as an electrode as mentioned above makes it possible to form conductive polymer films and passive-state layers uniformly and thereby attains stable characteristics even if the surfaces of the substrate are indented as a result of the above-described formation of the gas flow passages.

It is preferable that the metal material of the substrate according to the invention be a material superior in corrosion resistance such as stainless steel, aluminum, or titanium. However, other metal materials such as nickel, copper, iron, and alloys thereof can be used; general metal materials can be used.

Examples of the conductive polymer are polyaniline and polypyrrole. However, the invention is not limited to the case of using such a conductive polymer. Other conductive polymers such as polyacetylene, poly(p-phenylene), poly(phenylene vinylene), poly(phenylene sulfide), poly(3-methyl thiophene), poly(peri-naphthalene), polyacrylonitrile, polyoxadiazole, and poly[Fe phthalocyanine (tetrazine)]. The conductive polymer may be ones that are conductive by nature or ones that are made conductive by adding a conductive substance to a polymer.

### BRIEF DESCRIPTION OF THE DRAWINGS

Fig. 1 is a flow diagram showing a manufacturing process of a separator according to a first embodiment of the present invention;
Fig. 2 is a sectional view of a fuel cell module using separators according to the first embodiment of the invention;
Fig. 3 is a flow diagram showing a manufacturing process of a separator according to a second embodiment of the invention;
Fig. 4 is a sectional view of a fuel cell module using separators according to the second embodiment of the invention;
Fig. 5 shows measurement results of contact resistance in Example-1 of the invention; and
Fig. 6 shows measurement results of contact resistance in Example-2 of the invention.

### DETAILED DESCRIPTION OF THE PREFERRED EMBODIMENTS

### (Embodiment 1)

One embodiment of the present invention will be hereinafter described with reference to the accompanying drawings.

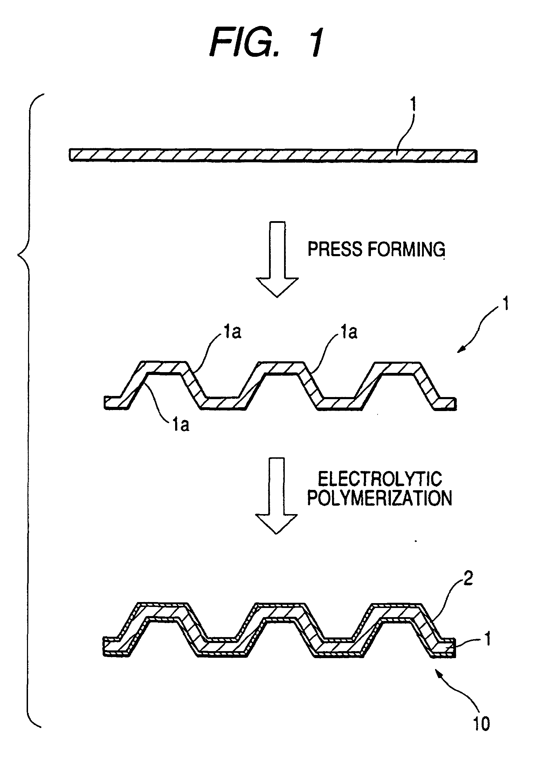

As shown in Fig. 1, a plate-like substrate 1 that is made of a proper metal material is prepared. Examples of the metal material are stainless steel, iron, aluminum, titanium, nickel, copper, and alloys thereof.

The substrate 1 is pressed to form groove-like gas flow passages 1a. Then, the surfaces of the substrate 1 are coated with conductive polymer films. It is desirable to perform, before the coating with conductive polymer films, surface treatment of cleaning the surfaces of the metal substrate 1 by acid cleaning or the like to produce fresh surfaces. This is to remove surface oxidized films that increase the contact resistance and to increase the adhesion between the conductive polymer material and the metal material.

Electrolytic polymerization is employed to form conductive polymer coatings on the substrate 1. To form polyaniline coatings, for example, by electrolytic polymerization, electrolysis is performed in an aqueous solution in which aniline as a monomer is dissolved by using the substrate 1 as the anode, whereby coatings of polyaniline which is a conductive polymer are directly synthesized electrochemically on the surfaces of the metal substrate 1: conductive polymer films 2 are thus formed. A separator 10 for a fuel cell module is manufactured by the above process.

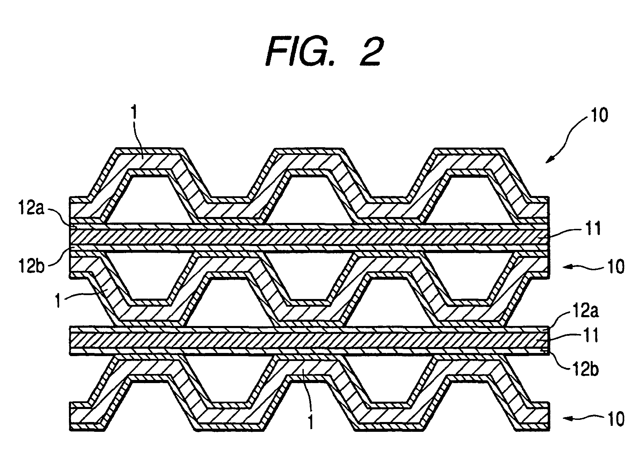

As shown in Fig. 2, each separator 10 is disposed between cells each of which is composed of an electrolyte 11 that is an ion exchange film and electrodes 12a and 12b that are disposed on both sides of the electrolyte 11. Apolymer electrolyte fuel cell module is formed by laminating a plurality of cells. In this structure, the separators 10 supply a fuel gas such as hydrogen and an oxidizer gas such as oxygen to the respective electrodes 12a and 12b through the groove-like gas flow passages 1a and function as collectors that are in contact with the respective electrodes 12a and 12b.

### (Embodiment 2)

Next, another embodiment of the invention will be described with reference to the accompanying drawings. Components having the same components in the first embodiment are given the same reference symbols as the latter and their descriptions will be omitted or simplified.

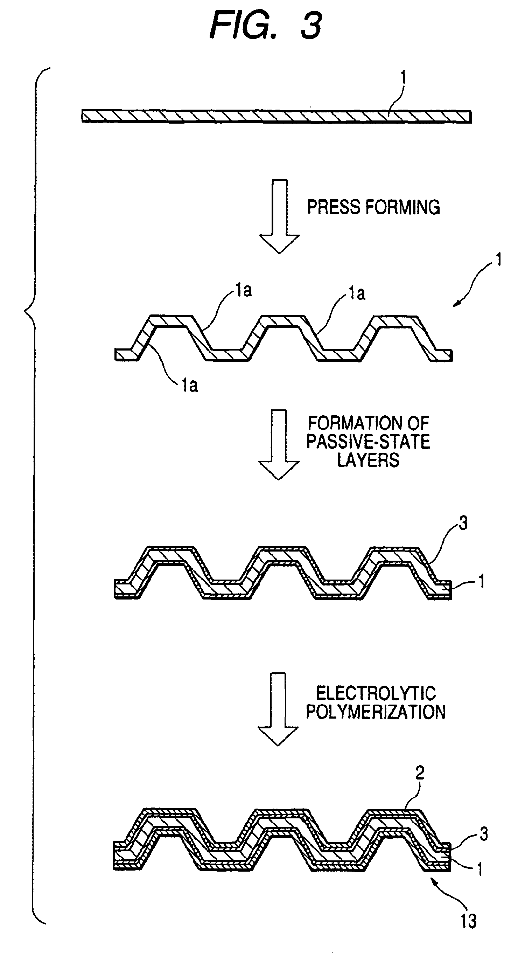

As shown in Fig. 3, a plate-like substrate 1 made of a proper metal material is pressed to form groove-like gas flow passages 1a. Then, passive-state layers are formed on the surfaces of the substrate 1. It is desirable to perform, before the formation of passive-state layers, surface treatment of cleaning the surfaces of the metal substrate 1 by acid cleaning or the like to produce fresh surfaces. This is to remove surface oxidized films that increase the contact resistance and to form stable passive-state layers.

For example, passive-state layers 3 are formed on the surfaces of the substrate 1 by immersing the substrate 1 in an acid liquid.

Then, conductive polymer coatings are formed on the passive-state layers 3 by electrolytic polymerization. To form polyaniline coatings, for example, by electrolytic polymerization, electrolysis is performed in an aqueous solution in which aniline as a monomer is dissolved by using the substrate 1 as the anode, whereby coatings of polyaniline which is a conductive polymer are directly synthesized electrochemically on the surfaces of the metal substrate 1: conductive polymer films 2 are thus formed. A separator 13 for a fuel cell module is manufactured by the above process.

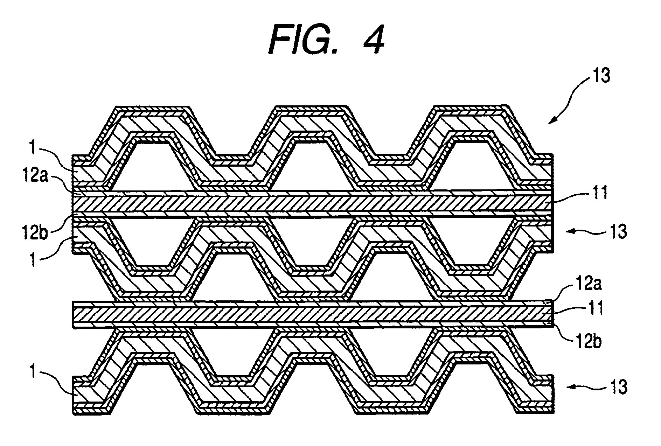

As shown in Fig. 4, each separator 13 is disposed between cells each of which is composed of an electrolyte 11 that is an ion exchange film and electrodes 12a and 12b that are disposed on both sides of the electrolyte 11. A polymer electrolyte fuel cell module is formed by laminating a plurality of cells. In this structure, the separators 13 supply a fuel gas such as hydrogen and an oxidizer gas such as oxygen to the respective electrodes 12a and 12b through the groove-like gas flow passages 1a and function as collectors that are in contact with the respective electrodes 12a and 12b.

### Examples

### (Example 1)

Next, an example of the invention will be described in comparison with comparative examples.

Stainless steel SUS304 was used as a material of a metal substrate. The SUS304 substrate, which was a bright annealed member having a 1-mm thickness, was subjected to acid cleaning as surface treatment before coating in which the SUS304 substrate was immersed for one hour in a 7% aqueous solution of hydrochloric acid that was kept at 25°C. After the acid cleaning, the SUS304 substrate was sufficiently rinsed with water and dried.

Electrolytic polymerization was employed to form conductive polymer films. The electrolytic solution was a 1% aniline aqueous solution. The temperature of the electrolytic bath was set to 20°C. The SUS304 substrate that had been subjected to the acid cleaning was immersed in a deaerated electrolytic solution. Polyaniline electrolytic polymerization was performed by using a platinum plate and the SUS304 substrate as the counter electrode and the anode, respectively, under electrolysis conditions of 0.25 mA/cm² and 20 minutes. After completion of the electrolysis, it was found that dense polyaniline coatings were formed on the surfaces of the SUS304 substrate. The polyaniline-coated SUS304 substrate was lifted out of the electrolytic solution, sufficientlyrinsedwithwater, and dried.

For comparison, Comparative Example 1 in which the surfaces of a SUS304 substrate were Au-plated and Comparative Example 2 in which a SUS304 substrate was not coated at all were prepared.

The contact resistance of the polyaniline-coated SUS304 substrate that was manufactured by the above-described method, the Au-plated substrate, and the substrate itself was evaluated in the following manner. An Au-plated copper plate was placed on a coated surface or a plated surface of the SUS304 substrate, or the substrate itself, and a carbon sheet was sandwiched between them. A voltage between the SUS304 substrate and the copper plate was measured while they were pressed against each other with a pressurizer and a constant current was caused to flow between them.

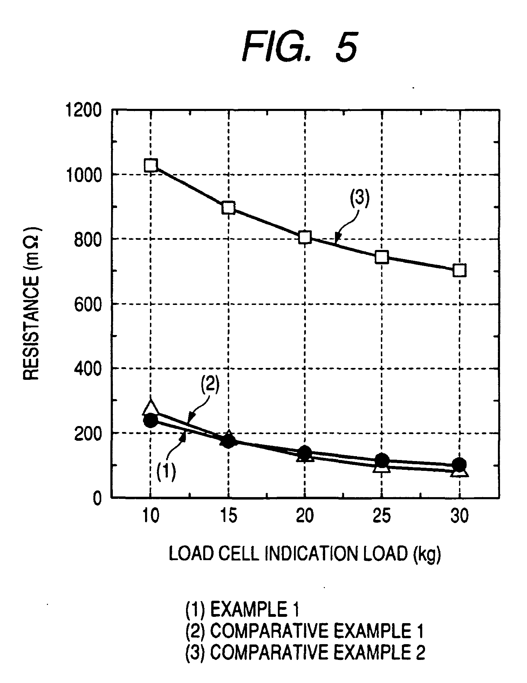

Fig. 5 is a graph showing contact resistance values calculated from voltage measurement results. As seen from Fig. 5, the contact resistance values of the polyaniline-coated SUS304 substrate are much smaller than those of the non-coated one and approximately the same as those of the Au-plated one having a good contact resistance characteristic. It can be said that the polyaniline-coated SUS304 substrate exhibits a very good contact resistance characteristic.

### (Example 2)

Next, another example of the invention will be described in comparison with comparative examples.

Stainless steel SUS304 was used as a material of a metal substrate. The SUS304 substrate, which was a bright annealed member having a 1-mm thickness, was subjected to acid cleaning as surface treatment before formation of passive-state layers in which the SUS304 substrate was immersed for 30 minutes in a 7% aqueous solution of hydrochloric acid that was kept at 25°C. After the acid cleaning, the SUS304 substrate was sufficiently rinsed with water and dried.

Passive-state layers were formed by immersing, for 30 minutes, the SUS304 substrate that had been subjected to the acid cleaning in a 40% aqueous solution of nitric acid that was kept at 60°C. After formation of passive-state layers, the SUS304 substrate was sufficiently rinsed with water and dried.

Then, conductive polymer films were formed on the passive-state layers by electrolytic polymerization in the same manner as in Example 1: polyaniline coatings were thus formed.

For comparison, Comparative Example 1 in which the surfaces of a SUS304 substrate were Au-plated and Comparative Example 2 in which a SUS304 substrate was coated with neither passive-state layers nor conductive polymer films were prepared.

The contact resistance of the SUS304 substrate that was manufactured by the above-described method, that is, the SUS304 substrate that was coated with the passive-state layers and the polyaniline coatings, the Au-plated substrate, and the substrate itself was evaluated in the same manner as in Example 1.

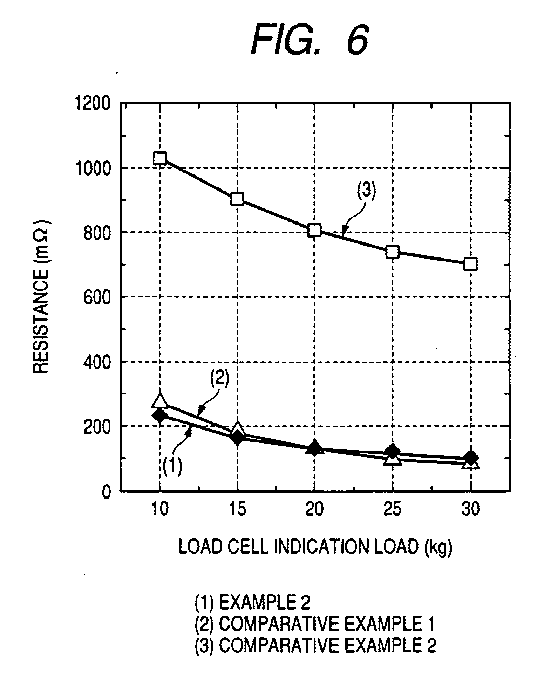

Fig. 6 is a graph showing contact resistance values calculated from voltage measurement results. As seen from Fig. 6, the contact resistance values of the SUS304 substrate that is coated with the passive-state layers and the polyaniline coatings are much smaller than those of the SUS304 substrate that is coated with neither passive-state layers nor polyaniline coatings and approximately the same as those of the Au-plated one having a good contact resistance characteristic. It can be said that the SUS304 substrate that is coated with the passive-state layers and the polyaniline coatings exhibits a very good contact resistance characteristic.

It goes without saying that the invention is not limited to the above-described examples.

As described above, the invention can provide a metal separator for a fuel cell that has conductive polymer coatings and is superior in contact resistance and corrosion resistance. In the manufacturing method, according to the invention, of a separator for a fuel cell, the surfaces of a substrate made of a metal material are coated with conductive polymer films by electrolytic polymerization, which prevents passivation that increases the resistivity of the substrate (passivation is prone to occur in baking). Since dense coatings are formed on the surfaces of the substrate, the substrate is prevented more effectively from being corroded. Where passive-state layers that are superior in conductivity and corrosion resistance are formed under the conductive polymer films, corrosion of the metal substrate is prevented and elution of metal ions that are harmful to the electrodes is prevented effectively even if the conductive polymer films have a small number of minute defects or are damaged during use. Further, the separator according to the invention is inexpensive and superior in productivity. In other words, a metal separator having conductive polymer coatings that are superior in contact resistance and corrosion resistance can be obtained. The manufacturing cost of a polymer electrolyte fuel cell can be reduced.

## Claims

1. A separator for a fuel cell, comprising:
a substrate made of a metal material; and
a conductive polymer film formed on a surface of said substrate.

2. A separator for a fuel cell, comprising:
a substrate made of a metal material;
a passive-state layer that is superior in conductivity and corrosion resistance formed on a surface of said substrate; and
a conductive polymer film is formed on the passive-state layer.

3. The separator for a fuel cell according to claim 1, wherein the conductive polymer film is not subjected to baking.

4. The separator for a fuel cell according to claim 2, wherein the conductive polymer film is not subjected to baking.

5. A manufacturing method of a separator for a fuel cell, wherein a conductive polymer film is formed on a surface of a substrate made of a metal material by electrolytic polymerization.

6. A manufacturing method of a separator for a fuel cell, wherein a conductive polymer film is formed, by electrolytic polymerization, on a passive-state layer that is formed on a surface of a substrate made of a metal material.

7. A manufacturing method of a separator for a fuel cell, comprising the steps of:
forming groove-like gas flow passages by bending a substrate made of a metal material; and
forming a conductive polymer film on a surface of the substrate by electrolytic polymerization.

8. A manufacturing method of a separator for a fuel cell, comprising the steps of:
forming groove-like gas flow passages by bending a substrate made of a metal material;
forming a passive-state layer on a surface of the substrate; and
forming a conductive polymer film on the passive-state layer by electrolytic polymerization.

9. The manufacturing method of a separator for a fuel cell according to claim 5, wherein the electrolytic polymerization is performed by using the substrate as an electrolytic polymerization electrode.

10. The manufacturing method of a separator for a fuel cell according to claim 6, wherein the electrolytic polymerization is performed by using the substrate as an electrolytic polymerization electrode.

11. The manufacturing method of a separator for a fuel cell according to claim 7, wherein the electrolytic polymerization is performed by using the substrate as an electrolytic polymerization electrode.

12. The manufacturing method of a separator for a fuel cell according to claim 8, wherein the electrolytic polymerization is performed by using the substrate as an electrolytic polymerization electrode.
